# EUROPÄISCHE PATENTSCHRIFT

(11) **EP 0 678 157 B1**
(45) Veröffentlichungstag und Bekanntmachung des Hinweises auf die Patenterteilung: **08.01.1997**
(21) Anmeldenummer: 94928295.8
(22) Anmeldetag: 04.10.1994
(51) Int. Cl.: F02D 9/10, F16K 27/02

(54) **DROSSELVORRICHTUNG**
THROTTLE DEVICE
DISPOSITIF D'ETRANGLEMENT

(30) Priorität: 07.10.1993 DE 4334180
(43) Veröffentlichungstag der Anmeldung: 25.10.1995
(73) Patentinhaber: ROBERT BOSCH GMBH, 70442 Stuttgart (DE)
(72) Erfinder: PETERS, Klaus-Jürgen, D-71563 Affalterbach (DE); GMELIN, Karl, D-74223 Flein (DE); ENTENMANN, Matthias, D-74321 Bietigheim-Bissingen (DE); ROPERTZ, Peter, D-71696 Möglingen (DE); HODULIK, Wolfgang, A-3822 Karlstein (AT); POLLMANN, Herbert, A-3822 Karlstein/Thaya (AT)
(86) Internationale Anmeldenummer: DE9401183
(87) Internationale Veröffentlichungsnummer: WO9509978

(56) Entgegenhaltungen:
- EP-A- 0 023 133
- EP-A- 0 575 643
- AU-B- 8 122 591
- DE-A- 4 202 437
- FR-A- 2 663 710
- GB-A- 2 161 247
- NL-A- 7 416 152
- PATENT ABSTRACTS OF JAPAN vol. 15, no. 138 (M-1100) 8. April 1991 & JP,A,03 018 632 (NIPPON CARBURETER) 28. Januar 1991

## Beschreibung

### Stand der Technik

Die Erfindung geht aus von einer Drosselvorrichtung nach der Gattung des Hauptanspruchs. Es ist schon eine Drosselvorrichtung bekannt (DE-OS 40 22 826), bei der eine Stellwelle drehfest mit einem Drosselorgan, zum Beispiel mit einer Drosselklappe verbunden ist, die mittels eines Stellantriebes gedreht wird. Die Stellwelle ist in einem Drosselklappenstutzen der Drosselvorrichtung beidseitig gelagert, wofür Aufnahmeöffnungen aus dem Drosselklappenstutzen ausgearbeitet sind, in welche die Lagereinrichtungen, beispielsweise in Form von Nadellagern, eingesetzt werden. Bei einer Herstellung der Drosselvorrichtung aus Aluminium in Druckgußtechnik ist eine sorgfältige Nachbearbeitung der sich in die Nähe der Drosselklappe erstreckenden Aufnahmeöffnungen erforderlich, um die Lagereinrichtungen ohne Verkanten genau einzupassen. Man hat daher bereits vorgeschlagen, den Drosselklappenstutzen aus Kunststoff im Spritzgußverfahren herzustellen. Derartige aus Kunststoff bestehende Drosselklappenstutzen weisen den Vorteil auf, daß sie leichter sind als Aluminiumgehäuse, daß das Herstellungsmaterial billiger ist und daß in beim Spritzgußvorgang mitgeformten Öffnungen Einsätze, beispielsweise mit Gewindebohrungen versehene Einsätze oder als Wälzlager für die Lagerung des Drosselorgans ausgebildete Einsätze eingepreßt werden können, so daß die Nachbearbeitung auf ein Minimum reduziert werden kann. Der Nachteil derartiger aus Kunststoff bestehender Drosselklappenstutzen besteht darin, daß sie während und nach dem Spritzgießen schrumpfen und sich nach dem Entformen verziehen und daß sie ferner eine schlechte Dimensionsstabilität unter Temperatur- und Krafteinwirkung besitzen. Hierbei muß berücksichtigt werden, daß der Motorraum eines Kraftfahrzeuges und daher auch die Drosselvorrichtung beziehungsweise der Drosselklappenstutzen großen Temperaturschwankungen unterworfen ist, da dort einerseits beim Abstellen des Kraftfahrzeuges im Winter im Freien hohe Minusgrade, andererseits beim Betrieb des Kraftfahrzeuges, insbesondere an heißen Sommertagen und nach dem Abstellen der Brennkraftmaschine, Temperaturen von über 120 °C auftreten können. Eine Maßhaltigkeit der Ansaugwandung derartiger aus Kunststoff bestehender Drosselklappenstutzen ist aus diesen Gründen nicht gewährleistet. Eine solche Maßhaltigkeit ist aber notwendig, damit jede Stellung des verschwenkbaren Drosselorgans einem genau definierten Durchströmquerschnitt entspricht und vor allem damit ein minimaler, genau definierter Restspalt oder ein vollständiges Absperren in einer Endlage des Drossselorgans möglich ist. Aus Umweltschutzgründen und zur Verminderung des Brennstoffverbrauchs werden heute sehr geringe Leerlaufdrehzahlen der Brennkraftmaschine gefordert, wobei das Drosselorgan eine Leerlaufstellung einnimmmt in der nur eine geringe Luftmenge an dem Drosselorgan vorbeiströmen darf. Es ist deshalb besonders wichtig, daß die Ansaugwandung des Drosselklappenstutzens der Drosselvorrichtung auch bei langem Betrieb über Jahre hinweg ihre Maßhaltigkeit, besonders im Bereich der sogenannten Leerlaufstellung des Drosselorgans beibehält, um durch eine gleichbleibend geringe Spaltbreite eine Nachjustierung des Drosselorgans zu gewährleisten. Nachteilig ist weiter, daß sich auch die Position und die Achsfluchtung der Lager für das Drosselorgan zum Beispiel durch die Temperaturschwankungen verändert, was zu einem Verklemmen des Drosselorgans führen kann. Ein Verklemmen würde bei Verwendung in Kraftfahrzeugen bewirken, daß Motordrehzahl und Geschwindigkeit vom Fahrer nicht mehr beeinflußt werden können.

Aus dem JP-A-3 018 632 ist eine gattungsgemäße Drosselvorrichtung mit einem Drosselklappenstutzen bekannt, der einen Kanal hat, durch den eine im Drosselklappenstutzen mittels Lagereinrichtungen gelagerte Stellwelle ragt. Die Stellwelle ist um eine Drehachse drehbar mit einem den Kanal steuernden Drosselorgan verbunden. Der Drosselklappenstutzen ist als Kunststoffspritzgußteil ausgebildet, in den ein ringförmiges Einlegeteil quer zum Kanal eingebettet ist. Beim Herstellen der Drosselvorrichtung besteht jedoch die Gefahr, daß beim Spritzgußvorgang Kunststoffmaterial in die Lagereinrichtungen eindringen kann.

### Vorteile der Erfindung

Die erfindungsgemäße Drosselvorrichtung mit den kennzeichnenden Merkmalen des Hauptanspruchs hat demgegenüber den Vorteil, daß in einfacher Art und Weise auch bei einer Ausbildung des Drosselklappenstutzens aus Kunststoff eine hohe Maßhaltigkeit der Ansaugwandung des Drosselklappenstutzens gewährleistet und eine vorteilhafte Einbindung der Lagereinrichtungen in den Drosselklappenstutzen, insbesondere beim Spritzvorgang aufgezeigt wird. Die an den Lagerstirnflächen anliegenden Laschenflächen verhindern beim Spritzgußvorgang das Eindringen von Kunststoffmaterial in die als Wälzlager ausgebildeten Lagereinrichtungen.

Durch die in den Unteransprüchen aufgeführten Maßnahmen sind vorteilhafte Weiterbildungen und Verbesserungen der im Hauptanspruch angegebenen Drosselvorrichtung möglich.

Durch die Verbindung der Lagereinrichtungen mit dem Einlegeteil können diese zusammen in die Spritzgußvorrichtung eingelegt und ohne weitere Fixierung umspritzt werden. Die Ausbildung von rinnenförmigen Vertiefungen in Form von Sicken am Einlegeteil hat den Vorteil, daß ein Kriechen entlang der Oberfläche des Einlegeteils während des Spritzvorgangs und in der Abkühlungsphase und danach wirksam verhindert und die Formstabilität des Drosselklappenstutzens sowie die Rundheit der Ansaugwandung verbessert wird. Die Neigung des Einlegeteils in Richtung der Leerlaufstellung der Drosselklappe bringt den Vorteil mit sich, daß die Ansaugwandung gerade in diesem Bereich eine hohe Maßgenauigkeit während der gesamten Lebensdauer beibehält.

### Zeichnung

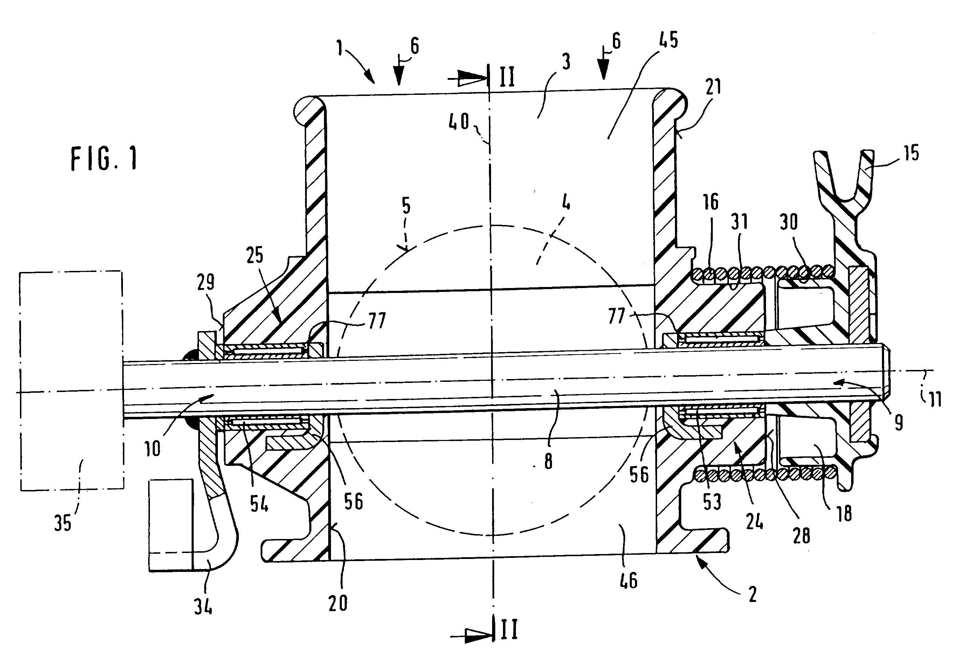

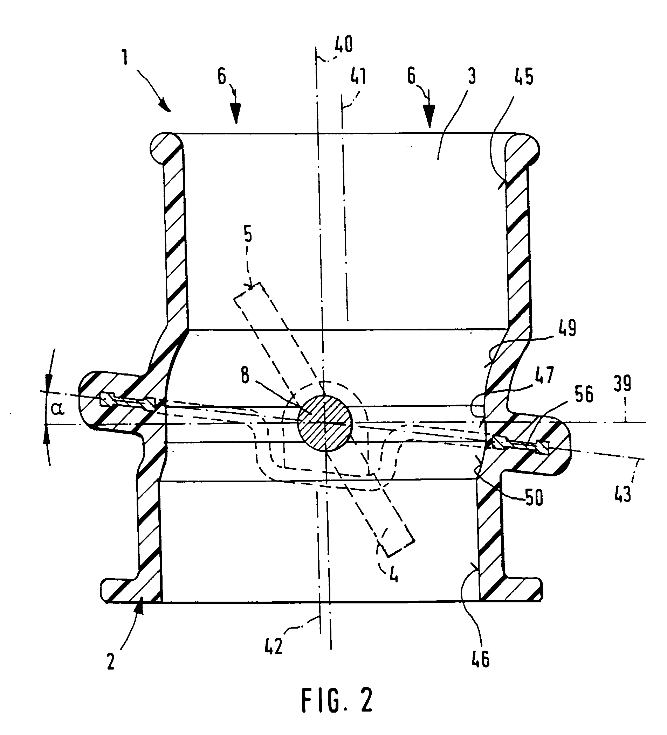

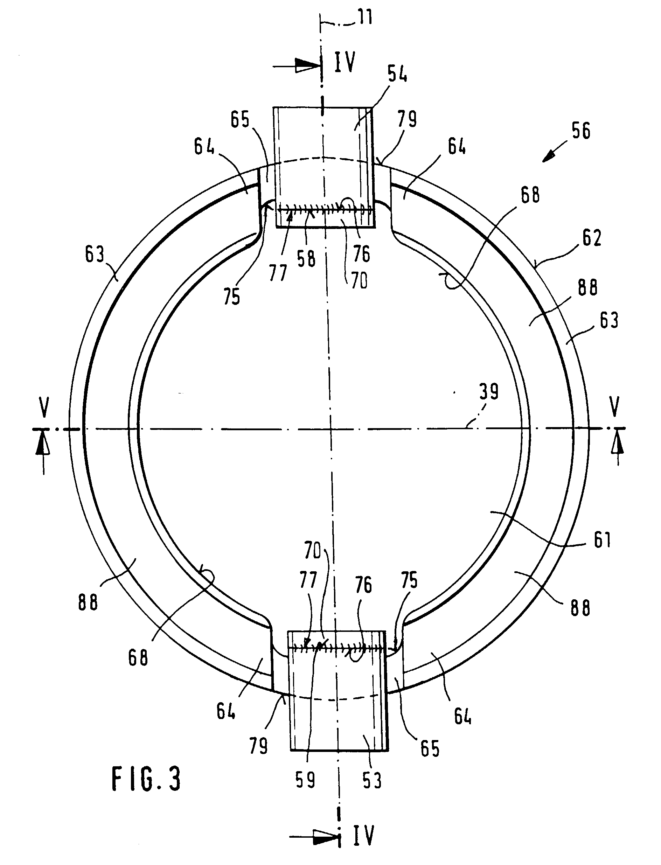

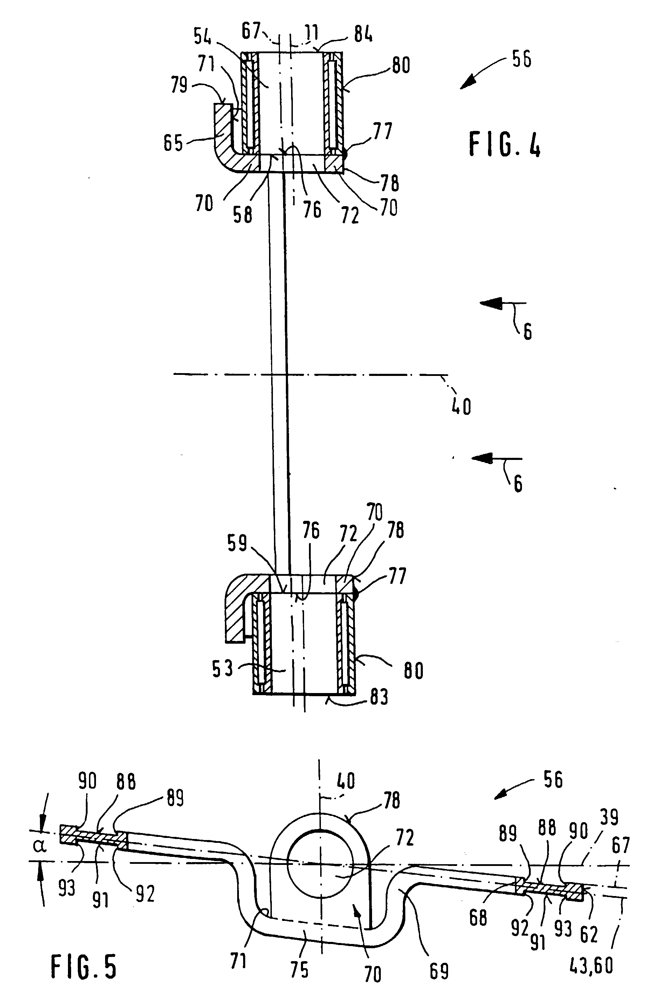

Ein Ausführungsbeispiel der Erfindung ist in der Zeichnung vereinfacht dargestellt und in der nachfolgenden Beschreibung näher erläutert. Es zeigen Figur 1 einen Schnitt durch eine erfindungsgemäß ausgestaltete Drosselvorrichtung, Figur 2 einen Schnitt entlang einer Linie II-II in Figur 1, Figur 3 eine Draufsicht des Einlegeteils mit verbundenen Lagereinrichtungen, Figur 4 einen Schnitt entlang einer Linie IV-IV in Figur 3, Figur 5 einen Schnitt entlang einer Linie V-V in Figur 3.

### Beschreibung des Ausführungsbeispiels

Die Figur 1 zeigt eine Drosselvorrichtung 1, die zur Steuerung der Leistung einer gemischverdichtenden, fremdgezündeten oder luftverdichtenden, selbstzündenden Brennkraftmaschine dient. Die Drosselvorrichtung 1 hat einen Drosselklappenstutzen 2, in welchem in einem Ansaugkanal 3 ein Drosselorgan, beispielsweise eine Drosselklappe 4 drehbar eingebracht ist. Die Drosselklappe 4 steuert mehr oder weniger die über ein Ansaugrohr in den Drosselklappenstutzen 2 einströmende Luftmenge, beziehungsweise ein einströmendes Brennstoffluftgemisch. Stromabwärts der Drosselklappe 4 ist der Drosselklappenstutzen 2 beispielsweise mit einer Anschlußleitung mit einem Brennraum der Brennkraftmaschine verbunden. Die Strömungsrichtung ist in den Figuren 1, 2 und 4 durch Pfeile 6 gekennzeichnet. Zum Verdrehen der Drosselklappe 4 ist eine Stellwelle 8 drehfest mit der Drosselklappe 4 verbunden. In der Figur 1 und in der Figur 2 ist die Drosselklappe 4 gestrichelt angedeutet. Auf eine Darstellung der Befestigung der Drosselklappe 4 mit der Stellwelle 8 wird verzichtet, da der Fachmann dies dem Stand der Technik entnehmen kann. Die Stellwelle 8 verläuft zentrisch zu einer Drehachse 11 der Drosselklappe 4 quer durch den Drosselklappenstutzen 2 hindurch. Dabei durchdringt die Stellwelle 8 auf zwei Seiten eine Ansaugwandung 20 des Drosselklappenstutzens 2 und ist in zwei, koaxial zur Drehachse 11 der Stellwelle 8 angeordneten, hülsenförmigen Aufnahmeverbreiterungen 24, 25 einer Außenwandung 21 des Drosselklappenstutzens 2, welche im folgenden als Stellteil 24 und Meßteil 25 bezeichnet werden, drehbar eingeschoben. Zur Lagerung der Stellwelle 8 sind wenigstens zwei Lagereinrichtungen 53 und 54 vorgesehen, welche beispielsweise in Form eines Wälzlagers insbesondere Nadellager oder eines Gleitlagers ausgeführt sind. In dem, in Figur 1 rechts liegenden hülsenförmigen Stellteil 24 ist die Lagereinrichtung 53 und in dem, in Figur 1 links liegenden hülsenförmigen Meßteil 25 ist die Lagereinrichtung 54 untergebracht. Die Stellwelle 8 ragt mit einem ersten Stellwellenende 9 über eine ringförmige Außenfläche 28 des Stellteils 24 hinaus. Ein Stellglied 15 ist mit einem hülsenförmig angeformten Teil 18 auf das erste Stellwellenende 9 aufgeschoben und beispielsweise mittels einer Schweißverbindung mit der Stellwelle 8 verbunden. Eine auf einer Außenwandung 30 des hülsenförmigen Teils 18 des Stellgliedes 15 und auf einer Außenwandung 31 des hülsenförmigen Stellteils 24 gewickelte Rückstellfeder 16 dient vorrangig zur Erzeugung einer Rückstellkraft in Schließrichtung der Drosselklappe 4 und zusätzlich zum Rückführen eines mit dem Stellglied 15 nicht näher dargestellten Gestänges oder Bowdenzugs. Das Gestänge oder der Bowdenzug ist beispielsweise mit einem Gaspedal verbunden, welches bei einer Betätigung ein Verdrehen der Drosselklappe 4 in Öffnungsrichtung bewirkt, um die Leistung der Brennkraftmaschine zu steuern. Gegenüberliegend zum Stellteil 24 ragt die Stellwelle 8 mit ihrem zweiten Stellwellenende 10, in Figur 1 links dargestellt, über eine ringförmige Außenfläche 29 des Meßteils 25 hinaus. Zur elektronischen Leerlaufsteuerung oder Motorleistungssteuerung kann ein Anlenkhebel 34 am zweiten Stellwellende 10 durch eine Schweißverbindung mit der Stellwelle 8 verbunden sein, um von einem Drosselklappenanstellmotor betätigt zu werden, der seinerseits von einem Steuergerät aktiviert wird. Zur Übermittlung elektrischer Signale und zur Kontrolle dient ein, in Figur 1 gestrichelt gezeichneter Drehwinkelgeber 35, der am zweiten Stellwellenende 10 eine Verdrehung der Drosselklappe 4 mißt.

Im Ausführungsbeispiel hat der Ansaugkanal 3 des Drosselklappenstutzens 2 eine besondere Ausgestaltung, um die Drosselcharakteristik insbesondere im Leerlaufbereich der Drosselklappe 4 zu verbessern. In der Figur 1 ist ein Schnitt durch den Drosselklappenstutzen 2 gezeigt, bei dem die Ansaugwandung 20 des Ansaugkanals 3 parallel zu einer in Strömungsrichtung 6 ausgerichteten Strömungsachse 40 geradlinig verläuft. Die Strömungsachse 40 ist quer zur Drehachse 11 orientiert und teilt den Ansaugkanal 3 der Figur 1 symmetrisch auf. Die Figur 2 zeigt einen zweiten Schnitt des Drosselklappenstutzens 2, welcher gegenüber dem Schnitt der Figur 1 um 90 Grad um die Strömungsachse 40 gedreht ist. Dabei ist ein stromaufwärts der Drosselklappe 4 liegender, zylindrischer Einströmabschnitt 45 mit mittiger Einströmachse 41 gegenüber einem sich stromabwärts liegendem, mittig zur Strömungsachse 40 angeordneten, zylindrischen Drosselabschnitt 47 in Figur 2 nach rechts versetzt angeordnet. Eine quer zur Strömungsachse 40 und quer zur Drehachse 11 verlaufende Horizontalachse 39 teilt den zylindrischen Drosselabschnitt 47 in Strömungsrichtung 6 symmetrisch auf. Ein stromabwärts dem Drosselabschnitt 47 mit der Drosselklappe 4 liegender, zylindrischer Abströmabschnitt 46 ist mit einer mittigen Abströmachse 42 gegenüber der Strömungsachse 40 in Figur 2 nach links versetzt angeordnet. Als Übergang vom Einströmabschnitt 45 zum Drosselabschnitt 47 dient ein erster Verbindungsabschnitt 49 und als Übergang von zylindrischem Drosselabschnitt 47 zum Abströmabschnitt 46 dient ein zweiter Verbindungsabschnitt 50. Die Verbindungsabschnitte 49, 50 haben eine bogenförmige Wandung, die in jeder Schnittfläche aufgespannt von Drehachse 11 und Horizontalachse 39 eine kreisrunde Form hat. Die Verbindungsabschnitte 49, 50 verlaufen schlauchförmig gebogen, so daß die Darstellung der Begrenzungskontur in der Figur 2 von erstem Verbindungsabschnitt 49, Drosselabschnitt 47 und zweitem Verbindungsabschnitt 50 eine S-Form zeigt. Durch die beschriebene, in Strömungsrichtung 6 zylindrisch versetzte Ausführungsform des Ansaugkanals 3 wird erreicht, daß insbesondere im Bereich der Leerlaufstellung und der Teillaststellung der Drosselklappe 4 bei wachsenden Anstellwinkeln nur ein maßvoller Anstieg der Leerlaufluftmenge, also eine feinfühlige Verstellung erfolgt, die durch konstruktive Formgebung beider bogenförmiger Verbindungsabschnitte 49 und 50 beeinflußbar ist.

Die Drosselklappe 4 ist in Leerlaufstellung um die Drehachse 11 mit einem Neigungswinkel α von etwa 4 bis 8 Grad geneigt. Der in den Figuren 2 und 5 eingetragene Neigungswinkel α ist von der Horizontalachse 39 und einer Anstellachse 43 der Drosselklappe 4 begrenzt, wobei die Anstellachse 43 fluchtend zur Mittelebene der Drosselklappe 4 ausgerichtet ist. Der Neigungswinkel α ist abhängig von der gewünschten Leerlaufluftmenge im Leerlaufbetrieb der Brennkraftmaschine. Zum dichten Einpassen und zum Vermeiden des Verklemmens bei Schließstellung der Drosselklappe 4 hat diese eine elliptische Form, wobei eine Darstellung einer Projektion der Drosselklappe 4 in einer von Horizontalachse 39 und Drehachse 11 aufgespannten Ebene einen kreisförmigen Querschnitt ergibt.

Um den Drosselklappenstutzens 2 in Kunststoffspritzgußtechnik mit präziser Rundheit wenigstens im Drosselabschnitt 47 herzustellen, ist es notwendig, diesen im Schwenkbereich und insbesondere im Leerlaufbereich der Drosselklappe 4 zu Versteifen, damit durch eine gleichbleibende Rundheit ein möglichst kleiner, lichter Spalt zwischen einer äußeren Mantelfläche 5 der Drosselklappe 4 und dem zylindrischen Drosselabschnitt 47 erreicht wird. Dazu wird ein Einlegeteil 56 verwendet, welches beim Herstellen des Drosselklappenstutzens 2 in die Spritzvorrichtung eingelegt ist und beim Spritzvorgang mit Kunststoff umspritzt wird, wobei das Einlegeteil 56 beim Abkühlen eine unerwünschte Schrumpfung des Kunststoffes im umspritzten Bereich des Einlegeteils 56 vermeidet, so daß eine mit sehr engen Toleranzen ausgeführte Ansaugwandung 20 mit präziser Rundheit herstellbar ist. Im Ausführungsbeispiel ist das Einlegeteil 56 fluchtend zur Anstellachse 43 mit dem Neigungswinkel α von etwa 4 bis 8 Grad in den aus Kunststoff hergestellten Drosselklappenstutzen 2 eingespritzt, um im wichtigen Bereich der Leerlaufstellung der Drosselklappe 4 einen lichten radialen Spaltabstand in der Größenordnung von wenigen µm zu erhalten.

Das Einlegeteil 56 kann kreisrund ausgebildet sein, hat jedoch beim Ausführungsbeispiel eine elliptische Form, die im wesentlichen mit einer Schnittkontur des Ansaugkanals 3 übereinstimmt, welche durch Schneiden des Ansaugkanals 3 mit einer durch Anstellachse 43 und Drehachse 11 aufgespannten Ebene entsteht, die im Ausführungsbeispiel unter dem Neigungswinkel α geneigt ist. Das Einlegeteil 56 hat eine Ringform mit einer elliptischen Durchgangsöffnung 61, um mit etwa gleichbleibendem Abstand von einer inneren Mantelfläche 68 des Einlegeteils 56 zur Ansaugwandung 20 in den Drosselklappenstutzen 2 eingespritzt zu werden, wobei der Querschnitt der Durchgangsöffnung 61 größer als der Öffnungsquerschnitt des Ansaugkanals 3 in der durch die Anstellachse 43 und Drehachse 11 aufgespannten Ebene gebildet ist.

Die Figur 3 zeigt eine Draufsicht des Einlegeteils 56, das entsprechend der Einbaulage im Drosselklappenstutzen 2 mit dem Neigungswinkel α um die Drehachse 11 gedreht gezeichnet ist und in der Darstellung der Projektion der Draufsicht nach Figur 3 eine kreisrunde Form annimmt. Der Neigungswinkel α ist in der Figur 5 einer Schnittdarstellung entlang der Linie V-V der Figur 3 eingezeichnet. Die ringförmige Form des Einlegeteils 56 setzt sich im wesentlichen aus zwei, diametral zur Strömungsachse 40 angeordneten, ellipsenförmigen Ringstücken 63 und zwei Faltungsteilen 65 zusammen. Das Einlegeteil 56 hat eine mittige Ebene 60, die sich durch die Ringstücke 63 radial erstreckt und durch deren in axialer Richtung gemessener Mitte ihre Dicke verläuft. Die Ringstücke 63 umgreifen in Umfangsrichtung halbschalenförmig mit Abstand zur Drehachse 11 beidseitig mit ihren gegenüberliegenden Ringstückenden 64 jeweils ein mit den Ringstücken 63 einstückig verbundenes, rinnenförmiges beziehungsweise U-förmiges Faltungsteil 65. Jedes Faltungsteil 65 hat zwei, in der Figur 3 in die Zeichenebene hineinragende ringförmige Schenkel 69 und eine von diesen begrenzte ringförmige Bodenfläche 71, die mit Abstand parallel zu der durch die Ringstücke 63 gehenden Anstellachse 43 verläuft. Die Bodenflächen 71 ergänzen mit radialen äußeren Mantelflächen 79 äußere radiale Mantelflächen 62 und mit radialen inneren Mantelflächen 75 innere radiale Mantelflächen 68 der Ringstücke 63 zur Ringform des Einlegeteils 56. Beide Faltungsteile 65 sind von einer durch die Drehachse 11 und die Strömungsachse 40 aufgespannten Ebene symmetrisch aufgeteilt und haben jeweils an der inneren Mantelfläche 75 winkelförmige Laschen 70, welche sich ausgehend von der Bodenfläche 71 stromaufwärts parallel zur Strömungsachse 40 in Richtung zu den Ringstücken 63 über eine Ebene 67 hinaus erstrecken, die durch die stromaufwärtige Oberfläche der Ringstücke 63 geht. Um die Stellwelle 8 innerhalb des Drosselklappenstutzens 2 aufzunehmen, haben beide Laschen 70 in der Nähe ihres freien Endes jeweils eine Durchgangsöffnung 72, welche im eingespritzten Zustand des Einlegeteils 56 mittig zur Drehachse 11 orientiert ist. Die Höhe der Laschen 70, gemessen von der Bodenfläche 71 zu der von den Ringstücken 63 gebildeten Ebene 67 ist größer als der Radius der Stellwelle 8, um die Stellwelle 8 ohne Behinderung in die Durchgangsöffnungen 72 einzuschieben. Erfindungsgemäß werden an den Laschen 70 die Lagereinrichtungen 53, 54 angeordnet, insbesondere mit diesen fest verbunden, beispielsweise durch Laserschweißen, um gemeinsam beim Spritzvorgang mit Kunststoff umspritzt zu werden. Zur Verbindung ist hierfür jeweils eine der Strömungsrichtung 6 entgegenstehende, über die Ebene 67 hinausragende halbkreisförmige Berandungsfläche 78 der Lasche 70 durch eine Schweißverbindung 77 mit jeweils einer, stromaufwärts liegenden zylindrischen Mantelfläche 80 der Lagereinrichtung 53, 54 verbunden. Die Lagereinrichtungen 53, 54 liegen dabei an einer Laschenfläche 76 an, die der inneren Mantelfläche 68 des Einlegeteils 56 abgewandt ist und erstrecken sich entlang des Faltungsteils 65 radial nach außen. Beim Spritzvorgang ist dabei das Einlegeteil 56 in dem Spritzwerkzeug so angeordnet, daß die Laschen 70 und die Faltungsteile 65 in dem Stellteil 24 und Meßteil 25 des Drosselklappenstutzens 2 von Kunststoff ummantelt werden. Dabei verhindern die Laschenflächen 76 leicht angepreßt an den beiden, dem Ansaugkanal 3 zugewandten ringförmigen Lagerstirnflächen 58, 59 der Lagereinrichtungen 53, 54 das Eindringen von Kunststoff in die Lagereinrichtungen 53, 54. Um beim Spritzvorgang auf der gegenüberliegenden Seite der Lagereinrichtungen 53, 54 das Eindringen von Kunststoff zu verhindern, sind die dortigen Lagerstirnflächen 83, 84 durch anliegende Schieber des Spritzwerkzeuges abgedichtet.

Zur weiteren Verbesserung der Formstabilität des Drosselklappenstutzens 2 und zur Erhöhung der Rundheit der Ansaugwandung 20 im Schwenkbereich, insbesondere im Leerlaufbereich der Drosselklappe 4 besitzt das Einlegeteil 56 Sicken 88, 91, die als rinnenförmige Vertiefungen aus der Oberfläche der Ringstücke 63 ausgearbeitet sind und beispielsweise einen Querschnitt in U-Form aufweisen. In Umfangsrichtung erstrecken sich die Sicken 88, 91 bis zu den Faltungsteilen 65, wobei vorteilhafterweise die der Strömungsrichtung 6 entgegengerichtete Sicke 88 mit einer inneren Begrenzungsfläche 89, beziehungsweise die der Strömungsrichtung 6 gerichtete Sicke 91 mit einer inneren Begrenzungsfläche 92 in unmittelbarer Nähe, in etwa parallel zur inneren Mantelfläche 68 des Ringstückes 63 verläuft und mit einer äußeren Begrenzungsfläche 90 der Sicke 88, beziehungsweise mit einer äußeren Begrenzungsfläche 93 der Sicke 91 in etwa parallel zur äußeren Mantelfläche 62 des Ringstückes 63 angeordnet ist. Durch die Sicken 88, 91 erfolgt eine besonderes gute Einbindung des Einlegeteils 56 in den Kunststoff des Drosselklappenstutzens 2, da beim Aushärten des Kunststoffes in der Spritzgußform ein Gleiten des Kunststoffes entlang der Oberfläche des Einlegeteils 56 durch die Sicken 88, 91 verringert wird und der Kunststoff an den Begrenzungsflächen 89, 90, 92 und 93 sich verkrallt, wodurch insbesondere bei einer Anordnung der Sicken 88, 91 in der Nähe der inneren Mantelfläche 68 der Ringstücke 63 eine verringerte Schrumpfung des Kunststoffes erreicht wird, so daß im Bereich zwischen der inneren Mantelfläche 68 und der Ansaugwandung 20 beziehungsweise des zylindrischen Drosselabschnitts 47 die Rundheit verbessert wird.

Das Einlegeteil 56 ist vorzugsweise als Blechbiegestanzteil hergestellt, wobei die Sicken 88, 91 in einfacher Weise in einem Herstellungsvorgang durch beispielsweise Stanzen, Prägen oder Pressen herstellbar sind. Die in Strömungsrichtung 6 gemessene Dicke der Ringstücke 63 und des Faltungsteiles 65 des metallenen Einlegeteils 56 sind entsprechend der gewünschten Steifigkeit des Drosselklappenstutzens 2 zu wählen.

Um die Lagereinrichtungen 53, 54 gut in den Kunststoff einzubinden, liegt die Bodenfläche 71 des Faltungsteils 65, wie in der Figur 4 gezeigt ist, nicht an den zylindrischen Mantelflächen 80 der Lagereinrichtungen 53 beziehungsweise 54 an, sondern es ist ein axialer Abstand zwischen der Mantelfläche 80 und der Bodenfläche 71 vorgesehen, so daß dieser freie Zwischenraum mit Kunststoff ausgefüllt werden kann. Eine gute Einbettung der Lagereinrichtungen 53, 54 in den Kunststoff ist auch dadurch gegeben, daß das Faltungsteil 65 in radialer Richtung etwa die Hälfte der Mantelflächen 80 der Lagereinrichtungen 53, 54 überdeckt und mit der äußeren Mantelfläche 79 mit radialem Abstand zu den Lagerstirnflächen 83, 84 endet.

Das Einlegeteil 56 kann auch aus Kunststoff hergestellt werden, wobei dieses als Kunststoffvorspritzling eine Form wie das metallene Einlegeteil 56 hat. Handelt es sich bei den Lagereinrichtungen 53, 54 um Gleitlager, so können die Lagerschalen der Gleitlager beim Herstellen des Kunststoffvorspritzlinges in entsprechend hülsenförmig ausgebildete, die Durchgangsöffnung 72 radial verlängernde Laschen 70 eingelegt, beziehungsweise in einfacher Weise mit angespritzt werden.

## Patentansprüche

1. Drosselvorrichtung (1) mit einem Drosselklappenstutzen (2), der einen Ansaugkanal (3) hat, durch den eine im Drosselklappenstutzen (1) mittels Lagereinrichtungen (53, 54) gelagerte Stellwelle (8) ragt, die um eine Drehachse (11) drehbar mit einem den Ansaugkanal (3) steuernden Drosselorgan (4) verbunden ist, wobei der Drosselklappenstutzen (2) als Kunststoffspritzgußteil ausgebildet ist, in den ein ringförmiges Einlegeteil (56) quer zum Ansaugkanal (3) eingebettet ist, dadurch gekennzeichnet, daß das Einlegeteil (56) abgewinkelte Laschen (70) aufweist, durch die die Stellwelle (8) ragt und die Laschen (70) mit jeweils einer dem Drosselorgan (4) abgewandten Laschenfläche (76) an einer dem Drosselorgan (4) zugewandten Lagerstirnfläche (58, 59) der Lagereinrichtungen (53, 54) anliegen.

2. Drosselvorrichtung nach Anspruch 1, dadurch gekennzeichnet, daß sich das Einlegeteil (56) im wesentlichen aus zwei, diametral zum Ansaugkanal (3) angeordneten Ringstücken (63) und zwei, mit den Ringstücken (63) einstückig verbundenen, rinnenförmigen Faltungsteilen (65) zusammensetzt.

3. Drosselvorrichtung nach Anspruch 2, dadurch gekennzeichnet, daß sich die Laschen (70) winkelförmig von einer Bodenfläche (71) des Faltungsteils (65) über eine von den Ringstücken (63) aufgespannten Ebene (67) hinaus erstrecken.

4. Drosselvorrichtung nach Anspruch 1 oder 3, dadurch gekennzeichnet, daß das Einlegeteil (56) mit einer Berandungsfläche (78) der Laschen (70) mit einer Mantelfläche (80) der Lagereinrichtungen (53, 54) fest verbunden ist.

5. Drosselvorrichtung nach Anspruch 4, dadurch gekennzeichnet, daß die Laschen (70) des Einlegeteils (56) durch Schweißen mit den Lagereinrichtungen (53, 54) verbunden sind.

6. Drosselvorrichtung nach Anspruch 1, dadurch gekennzeichnet, daß das Einlegeteil (56) als Blechteil ausgebildet ist.

7. Drosselvorrichtung nach Anspruch 1, dadurch gekennzeichnet, daß das Einlegeteil (56) als Kunststoffteil ausgebildet ist.

8. Drosselvorrichtung nach Anspruch 1, dadurch gekennzeichnet, daß das Einlegeteil (56) geneigt mit einem Neigungswinkel α zu einer Horizontalachse (39) quer zum Ansaugkanal (3) im Drosselklappenstutzen (2) eingelegt ist, der im wesentlichen der Neigung der Drosselklappe (4) in Leerlaufstellung entspricht.

9. Drosselvorrichtung nach Anspruch 8, dadurch gekennzeichnet, daß der Neigungswinkel α etwa 4 bis 8 Grad beträgt.

10. Drosselvorrichtung nach Anspruch 1, dadurch gekennzeichnet, daß das Einlegeteil (56) rinnenförmige Vertiefungen in Form von Sicken (88, 91) hat.

11. Drosselvorrichtung nach Anspruch 10, dadurch gekennzeichnet, daß sich das Einlegeteil (56) im wesentlichen aus zwei, diametral zum Ansaugkanal (3) angeordneten Ringstücken (63) und zwei, mit den Ringstücken (63) einstückig verbundenen, rinnenförmigen Faltungsteilen (65) zusammensetzt und die Sicken (88, 91) halbschalenförmig angeordnet sind und in etwa parallel zu einer inneren Mantelfläche (68) der Ringstücke (63) verlaufen.

12. Drosselvorrichtung nach Anspruch 11, dadurch gekennzeichnet, daß die Sicken (88, 91) mit einer inneren Begrenzungsfläche (89, 92) in der Nähe der inneren Mantelfläche (68) der Ringstücke (63) angeordnet sind.

13. Drosselvorrichtung nach Anspruch 11, dadurch gekennzeichnet, daß die Sicken (88, 91) sich in Umfangsrichtung der Ringstücke (63) bis zu den Faltungsteilen (65) erstrecken.

## Claims

1. Throttle device (1) with a throttle-flap connection piece (2) having a suction duct (3), through which projects an actuating shaft (8) which is mounted in the throttle-flap connection piece (1) by means of bearing arrangements (53, 54) and which is connected rotatably about an axis of rotation (11) to a throttle member (4) controlling the suction duct (3), characterized in that the throttle-flap connection piece (2) is designed as a plastic injection moulding, into which an annular insertion part (56) is embedded transversely relative to the suction duct (3), characterized in that the insertion part (56) has angular straps (70), through which the actuating shaft (8) projects, and the straps (70) each bear with a strap surface (76) facing away from the throttle member (4) against a bearing end face (58, 59) of the bearing arrangements (53, 54) which faces the throttle member (4).

2. Throttle device according to Claim 1, characterized in that the insertion part (56) is composed essentially of two ring pieces (63) arranged diametrically relative to the suction duct (3) and of two gutter-shaped folding parts (65) connected in one piece to the ring pieces (63).

3. Throttle device according to Claim 2, characterized in that the straps (70) extend angularly from a bottom surface (71) of the folding part (65) beyond a plane (67) spanned by the ring pieces (63).

4. Throttle device according to Claim 1 or 3, characterized in that the insertion part (56) is fixedly connected by means of a boundary surface (78) of the straps (70) to an outer surface (80) of the bearing arrangements (53, 54).

5. Throttle device according to Claim 4, characterized in that the straps (70) of the insertion part (56) are connected to the bearing arrangements (53, 54) by welding.

6. Throttle device according to Claim 1, characterized in that the insertion part (56) is designed as a sheet-metal part.

7. Throttle device according to Claim 1, characterized in that the insertion part (56) is designed as a plastic part.

8. Throttle device according to Claim 1, characterized in that the insertion part (56) is inserted transversely relative to the suction duct (3) in the throttle-flap connection piece (2) in a manner inclined at an angle of inclination α to a horizontal axis (39) which corresponds essentially to the inclination of the throttle flap (4) in the idling position.

9. Throttle device according to Claim 8, characterized in that the angle of inclination α is approximately 4 to 8 degrees.

10. Throttle device according to Claim 1, characterized in that the insertion part (56) has gutter-shaped depressions in the form of beads (88, 91).

11. Throttle device according to Claim 10, characterized in that the insertion part (56) is composed essentially of two ring pieces (63) arranged diametrically relative to the suction duct (3) and of two gutter-shaped folding parts (65) connected in one piece to the ring pieces (63), and the beads (88, 91) are arranged in half-shell form and extend approximately parallel to an inner cylindrical surface (68) of the ring pieces (63).

12. Throttle device according to Claim 11, characterized in that the beads (88, 91) are arranged with an inner limiting surface (89, 92) in the vicinity of the inner cylindrical surface (68) of the ring pieces (63).

13. Throttle device according to Claim 11, characterized in that the beads (88, 91) extend in the circumferential direction of the ring pieces (63) as far as the folding parts (65).

## Revendications

1. Dispositif d'étranglement (1) avec un ajutage (2) de clapet d'étranglement, qui a un canal d'aspiration (3), à travers lequel pénètre un axe de réglage (8) monté dans l'ajutage de clapet d'étranglement (1) au moyen de dispositifs de paliers (53, 54), qui est relié de façon à pouvoir tourner autour d'un axe de rotation (11) à un organe d'étranglement (4) commandant le canal d'aspiration (3), l'ajutage (2) du clapet d'étranglement étant constitué sous la forme d'une pièce moulée par injection en matière plastique, dans laquelle est noyée une pièce d'insertion (56) de forme annulaire perpendiculairement au canal d'aspiration (3), dispositif d'étranglement,
caractérisé en ce que
la pièce d'insertion (56) présente des colliers coudés à angle droit (70), à travers lesquels passe l'axe de réglage (8) et les colliers (70) reposent par respectivement l'une des faces de collier (76), située à l'opposé de l'organe d'étranglement (4), sur une face frontale de palier (58, 59) tournée vers l'organe d'étranglement (4) des dispositifs de palier (53, 54).

2. Dispositif d'étranglement selon la revendication 1,
caractérisé en ce que
la pièce d'insertion (56) se compose essentiellement de deux pièces annulaires (63) disposées diamétralement par rapport au canal d'aspiration (3) et de deux pièces pliées (65) de forme annulaire, reliées d'un seul tenant aux pièces annulaires (63).

3. Dispositif d'étranglement selon la revendication 2,
caractérisé en ce que
les colliers (70) s'étendent en forme de cornière à partir d'une surface de fond (71) de la pièce pliée (65) sur un plan (67) qui passe par les pièces annulaires (63).

4. Dispositif d'étranglement selon la revendication 1 ou 3,
caractérisé en ce que
la pièce d'insertion (56) est reliée par une surface de bordure (78) des colliers (70) à une surface enveloppe (80) des dispositifs de palier (53, 54) de façon solidaire.

5. Dispositif d'étranglement selon la revendication 4,
caractérisé en ce que
les colliers (70) de la pièce d'insertion (56) sont reliés par soudage aux dispositifs de paliers (53, 54).

6. Dispositif d'étranglement selon la revendication 1,
caractérisé en ce que
la pièce d'insertion (56) est constituée sous la forme d'une pièce en tôle.

7. Dispositif d'étranglement selon la revendication 1,
caractérisé en ce que
la pièce d'insertion (56) est constituée sous la forme d'une pièce en matière plastique.

8. Dispositif d'étranglement selon la revendication 1,
caractérisé en ce que
la pièce d'insertion (56) est insérée, en étant inclinée d'un angle d'inclinaison α par rapport à un axe horizontal (39) perpendiculairement au canal d'aspiration (3) dans l'ajutage (2) du clapet d'étranglement, qui correspond sensiblement à l'inclinaison du clapet d'étranglement (4) en position de ralenti.

9. Dispositif d'étranglement selon la revendication 8,
caractérisé en ce que
l'angle d'inclinaison α atteint environ 4 à 8 degrés.

10. Dispositif d'étranglement selon la revendication 1,
caractérisé en ce que
la pièce d'insertion (56) a des renfoncements en forme de gouttières sous la forme de moulures (88, 91).

11. Dispositif d'étranglement selon la revendication 10,
caractérisé en ce que
la pièce d'insertion (56) se compose essentiellement de deux pièces annulaires (63) disposées diamétralement par rapport au canal d'aspiration (3) et de deux pièces pliées (65) en forme de gouttière, reliées d'un seul tenant aux pièces annulaires (63), et les moulures (88, 91) sont disposées en forme de demi-coquilles et s'étendent à peu près parallèlement à une surface enveloppe intérieure (68) des pièces annulaires (63).

12. Dispositif d'étranglement selon la revendication 11,
caractérisé en ce que
les moulures (88, 91) sont disposées avec une surface de délimitation (89, 92) intérieure à proximité de la surface enveloppe intérieure (68) des pièces annulaires (63).

13. Dispositif d'étranglement selon la revendication 11,
caractérisé en ce que
les moulures (88, 91) s'étendent dans le sens périphérique des pièces annulaires (63) jusqu'aux pièces de plissement (65).
